# EUROPÄISCHE PATENTSCHRIFT

(11) **EP 0 403 879 B1**
(45) Veröffentlichungstag und Bekanntmachung des Hinweises auf die Patenterteilung: **28.08.1996**
(21) Anmeldenummer: 90110711.0
(22) Anmeldetag: 06.06.1990
(51) Int. Cl.: B01D 53/56, B01J 23/28

(54) **Arsenresistenter Mischoxidkatalysator**
Arsenic resistent mixed oxides catalyst
Catalyseur d'oxydes mixtes résistant à l'arsenic

(30) Priorität: 21.06.1989 DE 3920311
(43) Veröffentlichungstag der Anmeldung: 27.12.1990
(73) Patentinhaber: SIEMENS AKTIENGESELLSCHAFT, 80333 München (DE)
(72) Erfinder: Hums, Erich, Dr., D-8600 Bamberg (DE); Spitznagel, Günther, Dr., D-8520 Erlangen (DE)

(56) Entgegenhaltungen:
- EP-A- 0 268 265
- EP-A- 0 313 755
- EP-A- 0 323 195
- DE-A- 3 805 564
- DE-B- 1 253 685
- US-A- 4 071 601

## Beschreibung

Die Erfindung bezieht sich auf einen arsenresistenten, Oxide zumindest der Metalle Vanadium, Molybdän enthaltenden Katalysator.

Bekannte Mischoxidkatalysatoren haben unter anderem zur Minderung der Stickoxide in Rauchgasen in Gegenwart eines Reduktionsmittels Bedeutung erlangt. Hierzu werden die stickoxidhaltigen Rauchgase mit einem Reduktionsmittel, etwa mit Ammoniak oder Kohlenmonoxid, angereichert und an den katalytisch aktiven Oberflächen vorbeigeführt. Dabei werden die Stickoxide bei gleichzeitiger Oxidation des Ammoniaks in Stickstoff und Wasserdampf umgewandelt. Im allgemeinen werden hierzu Katalysatoren verwandt, die Oxide eines oder mehrerer der Metalle Titan, Vanadium, Molybdän oder Wolfram enthalten.

Beim Betrieb solcher Mischoxidkatalysatoren in stickoxidhaltigen Rauchgasen hat sich herausgestellt, daß diese ihre katalytische Aktivität mit der Zeit verlieren und daß dies um so schneller geschieht, je höher der Arsenanteil in den Rauchgasen ist. Beim Einsatz solcher Katalysatoren im Rauchgasstrom vor der Rauchgasreinigungsanlage, insbesondere wenn eine Ascherückführung vorgesehen ist, desaktivieren sie infolge der verfahrensbedingten Aufkonzentration von Katalysatorgiften, wie von Arsen (As₂O₃), relativ schnell.

Um diese Abnahme der katalytischen Aktivität in arsenhaltigen Rauchgasen soweit wie möglich zu unterdrücken, sind schon verschiedene Mischungen von katalytisch aktiven Komponenten untersucht worden. So offenbart die DE-A-38 05 564 einen Katalysator zur Reduktion von Stickoxiden in Rauchgasen, bei dem auf Titanoxid als Trägermaterial Oxide von Molybdän und Vanadium aufgebracht wurden. Dieser Katalysator zeigt einen schwächeren Desaktivierungsverlauf bei arsenhaltigen Rauchgasen als frühere vorbekannte DeNOₓ-Katalysatoren.

Durch die EP-A-0 313 755 ist ein Verfahren zur Herstellung eines gegen Arsenvergiftungen resistenten Katalysators zur Entfernung von Stickoxiden in Rauchgasen bekannt geworden. Der mit diesem Verfahren hergestellte Katalysator verwendet ebenfalls einen Träger aus Titanoxid, der nach der Calzinierung mit einer gelösten Molybdän- und/oder Wolframverbindung und gegebenenfalls Vanadiumverbindung imprägniert wird. Diese imprägnierten Verbindungen werden durch anschließende Calzinierung in Metalloxide umgewandelt. Auch dieser Katalysator soll weniger als andere DeNOₓ-Katalysatoren durch arsenhaltige Rauchgase desaktiviert werden, dennoch verliert er einen großen Teil seiner katalytischen Aktivität in arsenhaltigen Rauchgasen.

Ein weiterer Katalysator zur Reduktion von Stickoxiden in Rauchgasen ist durch die EP-A-0 268 265 bekannt geworden. Auch dieser Katalysator verwendet einen Träger aus Titanoxid, auf dem Oxide von Wolfram und Vanadium aufgebracht sind und der eine BET-Oberfläche von 80 bis 200 m² pro Gramm und ein Porenvolumen von 0,1 bis 0,5 cm³ pro Gramm aufweist. Trotz der mit diesem Katalysator erzielten verbesserten Resistenz gegen Arsenvergiftungen ist die Desaktivierung durch im Rauchgas mitgeführtes Arsen auch bei diesem Katalysator nach wie vor viel zu hoch.

Die nicht vorveröffentlichte EP-A-0 323 195 bezieht sich auf ein Verfahren zur Entfernung von Stickoxiden aus Rauchgasen mit Hilfe eines Katalysators, der Titanoxid und Mischoxide des Vanadiums und mindestens eines der Komponenten Molybdän und Mangan enthält. Gemäß der dortigen Patentschrift werden durch die Ausführungsbeispiele diverse Mischoxide von Molybdän und Vanadium bzw. Molybdän und Mangan erhalten. Unter anderem werden auch Mo₆V₅O₄₀ und Mo₄V₆O₂₅ erwähnt. Inwieweit die dort genannten Mischoxide tatsächlich erhalten werden, mag dahingestellt sein. Ein Mischoxid der Bruttoformel Mo₄V₆O₂₅ kann jedenfalls gemäß dem in dieser Patentschrift offenbarten Herstellverfahren nicht erhalten werden. Gemäß den Ausführungen in dieser Druckschrift sollen die dort erwähnten Mischoxide unempfindlich gegen im Rauchgas mitgeführte Metallkomponenten sein.

Der Erfindung liegt die Aufgabe zugrunde, einen Weg zu weisen, wie solche Katalysatoren gegenüber dem hauptsächlichen im Rauchgas vorhandenen Katalysatorgift Arsenoxid resistent gemacht werden können.

Diese Aufgabe wird durch das Merkmal des Anspruchs 1 und 4 gelöst. Weitere vorteilhafte Ausgestaltungen der Erfindung sind den Unteransprüchen 2, 3 und 5 bis 12 zu entnehmen.

Erfindungsgemäß ist bei einem arsenresistenten, zumindest Vanadium in Mischoxidform und Molybdän in oxidischer Form enthaltenden Katalysator, insbesondere zur Minderung der Stickoxide in Rauchgasen in Gegenwart eines Reduktionsmittels wie zum Beispiel Ammoniak oder Kohlenmonoxid, mit den Phasen MoO₃ und mindestens einer die Elemente Vanadium, Molybdän und Sauerstoff enthaltenden Phase, letztere zur Erhöhung der Arsenresistenz ganz oder teilweise von einer sauerstoffreichen in eine sauerstoffärmere Phase umgewandelt. Dabei liegt der Erfindung die Erkenntnis zugrunde, daß sich die sauerstoffärmere Phase gegenüber As₂O₃ nahezu völlig resistent verhält und zugleich eine katalytische Aktivität im Sinne des Reduktionskatalysators besitzt. Der Anteil dieser Phase kann entsprechend der gewünschten DeNOx-Umsatzrate für den Katalysator eingestellt werden.

Des weiteren werden zur Herstellung eines arsenresistenten Reduktionskatalysators erfindungsgemäß V₂O₅ und MoO₃ oder deren Vorläufer und gegebenenfalls weitere Metalloxide in dem angestrebten Mengenverhältnis miteinander vermischt, gegebenenfalls auch vermahlen und mit im Sinne der Phasenumwandlung wirksamen Stoffen kontaktiert werden. Hierdurch wird erreicht, daß durch diese Stoffe eine teilweise Reduktion bzw. Umwandlung der sauerstoffreicheren Phase in eine sauerstoffärmere Phase stattfindet. Die auf diese Weise hergestellten Katalysatoren sind weitgehend unempfindlich gegenüber dem Arsenoxid in Rauchgasen.

In besonders zweckmäßiger Weiterbildung der Erfindung können zusätzlich zu den Oxiden des Vanadiums und des Molybdäns auch schwer reduzierbare Metalloxide, wie z. B. TiO₂, SiO₂ und Al₂O₃, enthalten sein. Diese schwer reduzierbaren Metalloxide, wie z. B. Titanoxid, in der Anastasmodifikation unterstützen die katalytische Aktivität bei der Reduktion der Stickoxide in Gegenwart eines Reduktionsmittels, wie z. B. von Ammoniak, und können als Trägermaterialien für die übrigen katalytisch aktiven Komponenten eingesetzt werden.

In zweckmäßiger Ausgestaltung der Erfindung können Reduktionsmittel als im Sinne der Phasenumwandlung wirksame Stoffe verwendet werden. Diese entziehen dabei der sauerstoffreichen Phase Sauerstoff.

In Ausgestaltung der Erfindung können kurzkettige, ungesättigte Kohlenwasserstoffe als im Sinne der Phasenumwandlung wirksame Stoffe verwendet werden. Diese kurzkettigen, ungesättigten Kohlenwasserstoffe haben die Eigenschaft, die sauerstoffreichere Phase zu reduzieren und in die sauerstoffärmere Phase umzuwandeln.

Das Gleiche läßt sich in einer weiteren zweckmäßigen Ausgestaltung der Erfindung erreichen, wenn als Reduktionsmittel kurzkettige, gesättigte Kohlenwasserstoffe verwendet werden.

Weitere Ausgestaltungen der Erfindung sind den übrigen Unteransprüchen zu entnehmen.

Ausführungsbeispiele der Erfindung werden anhand zweier Figuren erläutert. Es zeigen:
- FIG 1: eine schematische Darstellung eines Herstellungsverfahrens für das erfindungsgemäße arsenresistente Katalysatormaterial und
- FIG 2: eine schematische Darstellung eines Herstellungsverfahrens eines geformten, erfindungsgemäßen arsenresistenten Katalysators.

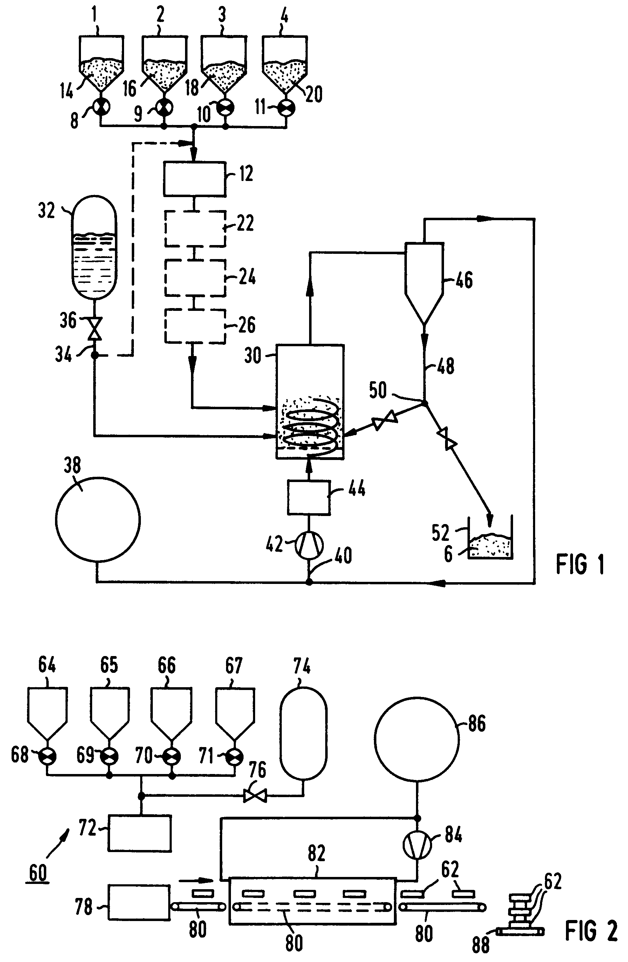

In der schematischen Darstellung der Figur 1 erkennt man mehrere Vorratsbehälter 1, 2, 3, 4 für die Ausgangskomponenten des herzustellenden Katalysatormaterials 6, die über je eine Dosiereinrichtung 8, 9, 10, 11 an einen Mischer 12 angeschlossen sind. In dem Vorratsbehälter 1 befindet sich Vanadiumdioxid 14, in dem Vorratsbehälter 2 Molybdänoxid 16 und in dem Vorratsbehälter 3 im Ausführungsbeispiel Titandioxid 18 in der Anastasmodifikation und im Vorratsbehälter 4 im Ausführungsbeispiel Siliziumoxid 20 jeweils in Pulverform. An den Mischer 12 ist im Ausführungsbeispiel eine Mühle 22 angeschlossen und an der Mühle ein Calzinierofen 24, der wiederum ausgangsseitig an eine zweite Mühle 26 angeschlossen ist. Die Ausgangsleitung 28 dieser zweiten Mühle mündet in einen Wirbelschichtreaktor 30. An den Wirbelschichtreaktor 30 ist außerdem ein Reduktionsmittelbehälter 32 angeschlossen. In dessen Reduktionsmittelleitung 34 ist ein Dosiervorventil 36 eingebaut. Der Wirbelschichtreaktor ist gasseitig an einen Inertgasvorratsbehälter 38 angeschlossen. In der zum Wirbelschichtreaktor 30 führenden Inertgasleitung 40 ist ein Gasverdichter 42 sowie eine Heizvorrichtung 44 eingebaut. Ausgangsseitig ist der Wirbelschichtreaktor 30 über einen Zyklonenabscheider 46 gasseitig an den Gasverdichter 42 und staubseitig an einen Auffangbehälter 52 für das arsenresistente Katalysatormaterial 6 und andererseits an den Wirbelschichtreaktor 30 angeschlossen.

Zur Herstellung des arsenresistenten Katalysators werden Vanadiumoxid 14, Molybdänoxid 16 oder deren Vorläufer und gegebenenfalls ein oder mehrere weitere Metalloxide 18, 20 dem Mischer 12 zugeführt. Dabei ist das Verhältnis von Vanadiumoxid und Molybdänoxid so eingestellt, daß sich zumindest die sauerstoffreiche Phase neben einer zusätzlichen MoO₃-Phase ausbilden kann. Im Mischer 12 werden diese verschiedenen Komponenten miteinander vermischt, sodann gegebenenfalls in der Mühle 22 noch einmal miteinander vermahlen und anschließend in dem Ofen 24 calziniert. Das calzinierte Produkt wird in einer dem Ofen 24 nachgeschalteten weiteren Mühle 26 nochmals aufgemahlen. Dieses Material wird in den Wirbelschichtreaktor eingeleitet. Zugleich wird eine angepaßte Menge Reduktionsmittel, wie z. B. kurzkettige, ungesättigte oder gesättigte Kohlenwasserstoffe, aus dem Reduktionsmittelbehälter 32 über das Dosierventil 36 direkt in den Wirbelschichtreaktor 30 eingeleitet. Im Wirbelschichtreaktor 30 werden die eingebrachten Feststoffe durch das durch den Gasverdichter 42 hereingedrückte und der Heizvorrichtung 44 aufgeheizte Inertgas aufgewirbelt. Bei der sich dabei einstellenden Temperatur von 200 bis 600° C, vorzugsweise 450 bis 550° C, reduziert das Reduktionsmittel die sauerstoffreiche Phase zur sauerstoffärmeren Phase. Das aus dem Wirbelschichtreaktor herausgetragene Inertgas-Feststoffgemisch wird in dem nachgeschalteten Zyklonabscheider 46 getrennt. Dabei wird das Inertgas wieder im Kreis in den Gasverdichter 42 zurückgeführt. Ein Teil des abgeschiedenen Feststoffes wird über die Verzweigungsstelle 50 in den Wirbelschichtreaktor 30 zurückgeführt. Ein Teil des abgeschiedenen Feststoffes wird als fertiges arsenresistentes Katalysatormaterial in einen Auffangbehälter befördert.

Die katalytische Aktivität dieses arsenresistenten Katalysators kann durch Einstellen dieses Verhältnisses in seiner Aktivität festgelegt werden. Dies kann entweder dadurch geschehen, daß der ursprüngliche Anteil an Vanadiumoxid entweder auf Kosten von Molybdänoxid und/oder auf Kosten von den weiteren Metalloxiden, wie z. B. von Titanoxid oder sonstigen Zuschlagstoffen, erhöht wird. Auf diese Weise ist es möglich, ein arsenresistentes DeNOx-Katalysatormaterial zu entwickeln, dessen katalytische Aktivität durch das im Rauchgasstrom mitgeführte Arsenoxid nicht weiter beeinträchtigt wird. Bei Verwendung von mehr als 3,5 Atomprozent Vanadium bezogen auf die Summe von Vanadiumoxid und Molybdänoxid und weniger als 85 Gew.-% Zuschlagstoffe ist dessen Gesamtaktivität größer als jene die bekannte DeNOₓ-Katalysatoren nach entsprechender Einsatzzeit in arsenhaltigen Rauchgasen erreichen.

Es wäre auch möglich, abweichend von dem in der Figur 1 dargestellten Herstellverfahren die Arbeitsschritte 22 bis 26, das heißt das Mahlen, Zwischencalzinieren und erneute Aufmahlen, wegfallen zu lassen. Auch wäre es möglich, das Reduktionsmittel statt in den Wirbelschichtreaktor 30 in die Mischstufe 12 einzuleiten.

Die Figur 2 zeigt eine Anlage 60 zur Herstellung eines geformten arsenresistenten Katalysators 62. Auch hier erkennt man die Vorratsbehälter 64, 65, 66, 67 für die Ausgangskomponenten des herzustellenden Katalysators 62. Diese Vorratsbehälter sind über je eine Dosiereinrichtung 68, 69, 70, 71 an einen Kneter 72 angeschlossen. Außerdem ist ein Behälter 74 für das Reduktionsmittel über ein Dosierventil 76 an den Kneter 72 angeschlossen. An den Kneter 72 schließt sich ausgangsseitig eine Formstufe 78 für die Herstellung geformter Katalysatorkörper, im Ausführungsbeispiel von Wabenkörpern, an. Diese Formstufe ist an eine Transportbandanlage 80 in einem elektrisch beheizten Durchlaufofen 82 angeschlossen. Der Durchlaufofen wird über einen Gasverdichter 84 aus einem Inertgasbehälter 86 mit einem Inertgas, im Ausführungsbeispiel mit Stickstoff, beschickt, welches im Kreis geführt wird.

Beim Betrieb der Anlage werden die verschiedenen Metalloxide und das Reduktionsmittel im voreingestellten Verhältnis miteinander gemischt und wegen ihres durch das zugegebene Reduktionsmittel bedingten teigigen Zustands miteinander geknetet. Die fertige Knetmasse, die nun das Reduktionsmittel enthält, wird zu Wabenkörpern geformt und anschließend über die Transportbandanlage durch den Durchlaufofen transportiert. Jetzt genügt die Temperatur von vorzugsweise 450 bis 550° C, die zum Calzinieren des Wabenkörpers erforderlich ist, um die sauerstoffreiche Phase in die sauerstoffärmere Phase zu verwandeln. Die fertigen, auf einer Palette stapelbaren Wabenkörper sind in der gleichen Weise arsenresistent wie das in der Anlage gemäß dem Ausführungsbeispiel der Figur 1 hergestellte Katalysatormaterial. Auch hier kann die katalytische Aktivität in den entsprechenden Grenzen auf Kosten von Molybdänoxid oder Titanoxid eingestellt werden.

Es hat sich darüber hinaus ergeben, daß die Umwandlung der sauerstoffreicheren, die Elemente V, Mo und Sauerstoff enthaltenden Phase in die sauerstoffärmere Phase außer durch Kontaktieren mit einem der genannten Reduktionsmittel auch durch Kontaktieren mit As₂O₃ erfolgen kann.

Die Anlage gemäß Figur 2 läßt sich aber auch dahingehend umgestalten, daß die Formstufe 78 durch eine Einrichtung zur Auftragung der Knetmasse auf einen metallischen Träger, wie z. B. ein Streckmetallgitter, ersetzt ist. Dies könnte z. B. durch Aufwalzen geschehen. Diese beschichteten Streckmetallgitter könnten, eventuell nach einem zwischengeschalteten Verformungsschritt (z. B. Zick-Zack-Faltung), anstelle der Wabenkörper in den Durchlaufofen 82 befördert werden. Auf diese Weise ließen sich auch Plattenkatalysatoren herstellen.

## Patentansprüche

1. Arsenresistenter, zumindest Vanadium in Mischoxidform und Molybdän in oxidischer Form enthaltender Katalysator, insbesondere zur Minderung der Stickoxide in Rauchgasen in Gegenwart eines Reduktionsmittels wie zum Beispiel Ammoniak oder Kohlenmonoxid, mit den Phasen MoO₃ und mindestens einer die Elemente Vanadium, Molybdän und Sauerstoff enthaltenden Phase, wobei letztere zur Erhöhung der Arsenresistenz ganz oder teilweise von einer sauerstoffreichen in eine sauerstoffärmere Phase umgewandelt ist.

2. Arsenresistenter Katalysator nach Anspruch 1, **dadurch gekennzeichnet,** daß zusätzlich zu der Vanadium Molybdän und Sauerstoff enthaltenden Phasen auch schwer reduzierbare Metalloxide wie z. B. TiO₂, SiO₂ und Al₂O₃ enthalten sind.

3. Arsenresistenter Katalysator nach Anspruch 1 und/oder Anspruch 2, **dadurch gekennzeichnet,** daß das Titandioxid als Träger für die Phasen dient.

4. Arsenresistenter Katalysator nach einem oder mehreren der Ansprüche 1 bis 3, **dadurch gekennzeichnet,** daß der Vanadiumanteil bezogen auf die Vanadium, Molybdän und Sauerstoff enthaltenden Phasen größer als 3,8 Atomprozent ist und wobei weniger als 85 Gew.-% zusätzlicher Stoffe bezogen auf die Gesamtmasse des Katalysatormaterials vorhanden sind.

5. Arsenresistenter Katalysator nach einem oder mehreren der Ansprüche 1 bis 4, **dadurch gekennzeichnet,** daß der Vanadiumanteil bezogen auf die Summe aus Vanadiumoxid und Molybdänoxid größer als 5 Atomprozent ist.

6. Arsenresistenter Katalysator nach einem oder mehreren der Ansprüche 1 bis 4, **dadurch gekennzeichnet,** daß der Vanadiumanteil bezogen auf die Summe aus Vanadiumoxid und Molybdänoxid größer als 8 Atomprozent ist.

7. Verfahren zur Herstellung eines arsenresistenten Katalysators nach einem oder mehreren der Ansprüche 1 bis 5, **dadurch gekennzeichnet,** daß V₂O₅ und MoO₃ oder deren Vorläufer und gegebenenfalls weitere Metalloxide in dem angestrebten Mengenverhältnis miteinander vermischt, gegebenenfalls auch vermahlen, und mit im Sinne der Phasenumwandlung in eine sauerstoffärmere Phase wirksamen Stoffen kontaktiert und calziniert werden.

8. Verfahren nach Anspruch 7, **dadurch gekennzeichnet,** daß Reduktionsmittel als im Sinne der Phasenumwandlung wirksame Stoffe verwendet werden.

9. Verfahren nach Anspruch 7 und/oder Anspruch 8, **dadurch gekennzeichnet,** daß kurzkettige, ungesättigte Kohlenwasserstoffe als im Sinne der Phasenumwandlung wirksame Stoffe verwendet werden.

10. Verfahren nach einem oder mehreren der Ansprüche 7 bis 9, **dadurch gekennzeichnet,** daß kurzkettige, gesättigte Kohlenwasserstoffe als im Sinne der Phasenumwandlung wirksame Stoffe verwendet werden.

11. Verfahren nach Anspruch 7, **dadurch gekennzeichnet,** daß As₂O₃ als im Sinne der Phasenumwandlung wirksamer Stoff verwendet wird.

12. Verfahren nach einem oder mehreren der Ansprüche 7 bis 11, **dadurch gekennzeichnet,** daß die Kontaktierung bei einer Temperatur von 200 bis 600° C erfolgt.

13. Verfahren nach einem oder mehreren der Ansprüche 7 bis 12, **dadurch gekennzeichnet,** daß die Kontaktierung in einer Wirbelschicht erfolgt.

14. Verfahren nach einem oder mehreren der Ansprüche 7 bis 13, **dadurch gekennzeichnet,** daß die Kontaktierung in Gegenwart eines Inertgases erfolgt.

15. Verfahren nach einem oder mehreren der Ansprüche 7 bis 14, **dadurch gekennzeichnet,** daß die Kontaktierung in Gegenwart von Stickstoff erfolgt.

16. Verfahren nach einem oder mehreren der Ansprüche 7 bis 15, **dadurch gekennzeichnet,** daß die im Sinne der Phasenumwandlung wirksamen Stoffe dem Vanadiumoxid und Molybdänoxid oder deren Vorläufer beigemischt werden und die Mischung anschließend einer Temperaturbehandlung unterzogen wird.

17. Verfahren nach einem oder mehreren der Ansprüche 7 bis 16, **dadurch gekennzeichnet,** daß die Phasenumwandlung der Mischoxidphase im Fertigungsschritt des Endcalzinierens erfolgt.

18. Verfahren nach einem oder mehreren der Ansprüche 7 bis 17, **dadurch gekennzeichnet,** daß die Phasenumwandlung der Mischoxidphase beim betriebsmäßigen Einsatz des Mischoxidkatalysators im Rauchgasstrom erfolgt.

## Claims

1. Arsenic-resistant catalyst containing at least vanadium in mixed oxide form and molybdenum in oxidic form, in particular for reducing nitrogen oxides in flue gases in the presence of a reducing agent, such as ammonia or carbon monoxide for example, having the phases MoO₃ and at least one phase containing the elements vanadium, molybdenum and oxygen, wherein the latter phase is converted completely or partially from an oxygen-rich phase into a phase which is poorer in oxygen in order to increase the resistance to arsenic.

2. Arsenic-resistant catalyst according to claim 1, characterised in that metal oxides which are difficult to reduce, such as TiO₂, SiO₂ and Al₂O₃ for example, are contained in addition to the phases containing vanadium, molybdenum and oxygen.

3. Arsenic-resistant catalyst according to claim 1 and/or claim 2, characterised in that titanium dioxide is used as a carrier for the phases.

4. Arsenic-resistant catalyst according to one or more of the claims 1 to 3, characterised in that the portion of vanadium in relation to the phases containing vanadium, molybdenum and oxygen is greater than 3.8 atom percent, and wherein less than 85% by weight of additional substances in relation to the total mass of the catalyst material are present.

5. Arsenic-resistant catalyst according to one or more of the claims 1 to 4, characterised in that the portion of vanadium in relation to the phases containing vanadium, molybdenum and oxygen is greater than 5 atom percent.

6. Arsenic-resistant catalyst according to one or more of the claims 1 to 4, characterised in that the portion of vanadium in relation to the phases containing vanadium, molybdenum and oxygen is greater than 8 atom percent.

7. Method for producing an arsenic-resistant catalyst according to one or more of the claims 1 to 5, characterised in that V₂O₅ and MoO₃, or their precursors and if appropriate further metal oxides, are mixed together in the desired quantitative ratio, are possibly ground as well, and are contacted and calcined with substances which are effective in the sense of the phase conversion into a phase which is poorer in oxygen.

8. Method according to claim 7, characterised in that reducing agents are used as substances which are effective in the sense of the phase conversion.

9. Method according to claim 7 and/or claim 8, characterised in that short-chained, unsaturated hydrocarbons are used as substances which are effective in the sense of the phase conversion.

10. Method according to one or more of the claims 7 to 9, characterised in that short-chained, saturated hydrocarbons are used as substances which are effective in the sense of the phase conversion.

11. Method according to claim 7, characterised in that As₂O₃ is used as a substance which is effective in the sense of the phase conversion.

12. Method according to one or more of the claims 7 to 11, characterised in that the contacting takes place at a temperature of between 200 and 600 °C.

13. Method according to one or more of the claims 7 to 12, characterised in that the contacting takes place in a fluidised bed.

14. Method according to one or more of the claims 7 to 13, characterised in that the contacting takes place in the presence of an inert gas.

15. Method according to one or more of the claims 7 to 14, characterised in that the contacting takes place in the presence of nitrogen.

16. Method according to one or more of the claims 7 to 15, characterised in that the substances which are effective in the sense of the phase conversion are mixed with the vanadium oxide and molybdenum oxide or their precursors, and the mixture is subsequently subjected to heat treatment.

17. Method according to one or more of the claims 7 to 16, characterised in that the phase conversion of the mixed oxide phase takes place in the production stage of the final calcination.

18. Method according to one or more of the claims 7 to 17, characterised in that the phase conversion of the mixed oxide phase takes place during operational use of the mixed oxide catalyst in the flow of flue gas.

## Revendications

1. Catalyseur résistant à l'arsenic, contenant au moins du vanadium sous forme d'un oxyde mixte et du molybdène sous forme oxyde, en particulier pour diminuer la concentration des oxydes d'azote dans les fumées, en présence d'un réducteur tel par exemple que l'ammoniac ou le monoxyde de carbone, possédant les phases MoO₃ et au moins une phase contenant les éléments vanadium, molybdène et oxygène, cette dernière étant, pour augmenter la résistance à l'arsenic, le résultat d'une conversion totale ou partielle d'une phase à haute teneur en oxygène en une phase à basse teneur en oxygène.

2. Catalyseur résistant à l'arsenic selon la revendication 1, caractérisé en ce que, outre les phases contenant du vanadium, du molybdène et de l'oxygène, sont aussi présents des oxydes métalliques difficilement réductibles, tels par exemple que TiO₂, SiO₂ et Al₂O₃.

3. Catalyseur résistant à l'arsenic selon la revendication 1 et/ou la revendication 2, caractérisé en ce que le dioxyde de titane sert de support aux phases.

4. Catalyseur résistant à l'arsenic selon l'une ou plusieurs des revendications 1 à 3, caractérisé en ce que la quantité de vanadium, rapportée aux phases contenant du vanadium, du molybdène et de l'oxygène, est supérieure à 3,8 % en atomes, moins de 85 % de substances supplémentaires étant présentes, par rapport à la masse totale du matériau catalyseur.

5. Catalyseur résistant à l'arsenic selon l'une ou plusieurs des revendications 1 à 4, caractérisé en ce que la quantité de vanadium, rapportée aux phases contenant du vanadium, du molybdène et de l'oxygène, est supérieure à 5 % en atomes.

6. Catalyseur résistant à l'arsenic selon l'une ou plusieurs des revendications 1 à 4, caractérisé en ce que la quantité de vanadium, rapportée aux phases contenant du vanadium, du molybdène et de l'oxygène, est supérieure à 8 % en atomes.

7. Procédé pour préparer un catalyseur résistant à l'arsenic selon l'une ou plusieurs des revendications 1 à 5, caractérisé en ce qu'on mélange les uns aux autres, selon la proportion pondérale voulue, du V₂O₅ et du MoO₃, ou leurs précurseurs, et éventuellement d'autres oxydes métalliques, et éventuellement aussi on les broie, et on les met en contact avec des substances actives, en vue d'une conversion de phase, dans une phase pauvre en oxygène, et on les calcine.

8. Procédé selon la revendication 7, caractérisé en ce qu'on utilise des réducteurs comme substances actives en vue d'une conversion des phases.

9. Procédé selon la revendication 7 et/ou la revendication 8, caractérisé en ce qu'on utilise comme substances actives en vue d'une conversion des phases des hydrocarbures insaturés à courte chaîne.

10. Procédé selon l'une ou plusieurs des revendications 7 à 9, caractérisé en ce qu'on utilise comme substances actives en vue d'une conversion des phases des hydrocarbures saturés à courte chaîne.

11. Procédé selon la revendication 7, caractérisé en ce qu'on utilise de l'As₂O₃ comme substance active en vue d'une conversion des phases.

12. Procédé selon l'une ou plusieurs des revendications 7 à 11, caractérisé en ce que la mise en contact a lieu à une température de 200 à 600°C.

13. Procédé selon l'une ou plusieurs des revendications 7 à 12, caractérisé en ce que la mise en contact s'effectue dans un lit fluidisé.

14. Procédé selon l'une ou plusieurs des revendications 7 à 13, caractérisé en ce que la mise en contact s'effectue en présence d'un gaz inerte.

15. Procédé selon l'une ou plusieurs des revendications 7 à 14, caractérisé en ce que la mise en contact s'effectue en présence d'azote.

16. Procédé selon l'une ou plusieurs des revendications 7 à 15, caractérisé en ce que les substances actives en vue d'une conversion des phases sont mélangées à l'oxyde de vanadium et à l'oxyde de molybdène ou à leurs précurseurs, le mélange étant ensuite soumis à un traitement thermique.

17. Procédé selon l'une ou plusieurs des revendications 7 à 16, caractérisé en ce que la conversion des phases de la phase oxyde mixte a lieu lors de l'étape de finition de la calcination finale.

18. Procédé selon l'une ou plusieurs des revendications 7 à 17, caractérisé en ce que la conversion des phases de la phase oxyde mixte a lieu lors de l'utilisation industrielle du catalyseur à base d'un oxyde mixte, dans le courant de fumées.
